# EUROPEAN PATENT APPLICATION

(11) **EP 3 306 486 A1**
(43) Date of publication of application: **11.04.2018**
(21) Application number: 15893954.6
(22) Date of filing: 11.11.2015
(51) Int. Cl.: G06F 17/30

(54) **PUSHED INFORMATION PROCESSING METHOD, APPARATUS, AND DEVICE, AND NON-VOLATILE COMPUTER STORAGE MEDIUM**

(30) Priority: 02.06.2015 CN 201510294359
(71) Applicant: Baidu Online Network Technology (Beijing) Co., Ltd, Beijing 100085 (CN)
(72) Inventor: DENG, Yulong, Beijing 100085 (CN)
(74) Representative: dompatent von Kreisler Selting Werner - Partnerschaft von Patent- und Rechtsanwälten mbB
(86) International application number: PCT/CN2015/094337
(87) International publication number: WO 2016/192309

(57) **Abstract**

The present disclosure provides a method and apparatus for processing pushed information, an apparatus and a non-volatile computer storage medium. In embodiments of the present disclosure, the pushed information is obtained according to at least one of the user's user attribute and the user's user position, then the pushed information is sorted according to the operation data of the pushed information so that first N pushed information can be presented to the user, and N is an integer larger than or equal to 1. Since the pushed information can be sorted according to the operation data of the pushed information and first N pushed information can be presented to the user so that the pushed information can satisfy the user's real acquisition intention, this can avoid the problem in the prior art about increase of data interaction between the designated application and a server corresponding thereto since the user uses a designated application to repeatedly perform query related to the acquisition intention, and thereby reduce the processing burden of the server.

## Description

The present disclosure claims priority to the Chinese patent application No.201510294359.9 entitled "Method and Apparatus for Processing Pushed Information" filed on the filing date June 2, 2015, the entire disclosure of which is hereby incorporated by reference in its entirety.

### Field of the Disclosure

The present disclosure relates to technologies for processing pushed information, and particularly to a method and apparatus for processing pushed information, an apparatus and a non-volatile computer storage medium.

### Background of the Disclosure

As communication technologies develop, terminals integrate more and more functions so that a system function listing of the terminals includes more and more corresponding applications (APPs). Some applications relate to some information pushing service such as advertisement pushing, soft article pushing, games pushing or application pushing. In current pushing services, matching information to be pushed is pushed to the user based on the user's user position.

However, pushed information obtained by performing matching operation completely depending on the user position might not satisfy the user's real acquisition intention so that the user can only obtain a search result in compliance with the acquisition intention by using a designated application to repeatedly perform query related to the acquisition intention. This increases data interaction between the designated application and a server corresponding thereto, and thereby causes increase of the processing burden of the server.

### Summary of the Disclosure

A plurality of aspects of the present disclosure provide a method and apparatus for processing pushed information, an apparatus and a non-volatile computer storage medium, to reduce the processing burden of the server.

According to an aspect of the present disclosure, there is provided a method for processing pushed information, comprising:
obtaining pushed information according to at least one of the user's user attribute and the user's user position;
sorting the pushed information according to operation data of the pushed information;
presenting first N pushed information to the user, N being an integer larger than or equal to 1.

The above aspect and any possible implementation mode further provide an implementation mode: the sorting the pushed information according to operation data of the pushed information comprises:
sorting the pushed information according to grade data of the pushed information and operation data of the pushed information.

The above aspect and any possible implementation mode further provide an implementation mode: the operation data of the pushed information comprises:
operation data resulting from the user's operation of a carrier of the pushed information;
operation data resulting from the user's operation of content of the pushed information; and
operation data resulting from the user's operation of operation options of the pushed information.

The above aspect and any possible implementation mode further provide an implementation mode: the carrier of the pushed information comprises a plane carrier or a 3-dimensional carrier.

The above aspect and any possible implementation mode further provide an implementation mode: the operation data comprise at least one of the following operation data:
data of a clicking operation;
data of the clicking operation and a time length of the clicking operation;
data of the clicking operation and a frequency of the clicking operation;
data of a dragging operation;
data of the dragging operation and a time length of the dragging operation;
data of the dragging operation and a frequency of the dragging operation;
data of a selection operation;
data of the selection operation and a time length of the selection operation; and
data of the selection operation and a frequency of the selection operation.

According to another aspect of embodiments of the present disclosure, there is provided an apparatus for processing pushed information, comprising:
an obtaining unit configured to obtain pushed information according to at least one of the user's user attribute and the user's user position;
a sorting unit configured to sort the pushed information according to operation data of the pushed information;
a presenting unit configured to present first N pushed information to the user, N being an integer larger than or equal to 1.

The above aspect and any possible implementation mode further provide an implementation mode: the sorting unit is configured to sort the pushed information according to grade data of the pushed information and operation data of the pushed information.

The above aspect and any possible implementation mode further provide an implementation mode: the operation data of the pushed information comprises:
operation data resulting from the user's operation of a carrier of the pushed information;
operation data resulting from the user's operation of content of the pushed information; and
operation data resulting from the user's operation of operation options of the pushed information.

The above aspect and any possible implementation mode further provide an implementation mode: the carrier of the pushed information comprises a plane carrier or a 3-dimensional carrier.

The above aspect and any possible implementation mode further provide an implementation mode: the operation data comprise at least one of the following operation data:
data of a clicking operation;
data of the clicking operation and a time length of the clicking operation;
data of the clicking operation and a frequency of the clicking operation;
data of a dragging operation;
data of the dragging operation and a time length of the dragging operation;
data of the dragging operation and a frequency of the dragging operation;
data of a selection operation;
data of the selection operation and a time length of the selection operation; and
data of the selection operation and a frequency of the selection operation.

According to a further aspect of the present disclosure, there is provided an apparatus, comprising
one or more processors;
a memory;
one or more programs stored in the memory and configured to execute the following operations when executed by the one or more processors:
obtaining pushed information according to at least one of the user's user attribute and the user's user position;
sorting the pushed information according to operation data of the pushed information;
presenting first N pushed information to the user, N being an integer larger than or equal to 1.

According to a further aspect of the present disclosure, there is provided a non-volatile computer storage medium in which one or more programs are stored, an apparatus being enabled to execute the following operations when said one or more programs are executed by the apparatus:
obtaining pushed information according to at least one of the user's user attribute and the user's user position;
sorting the pushed information according to operation data of the pushed information;
presenting first N pushed information to the user, N being an integer larger than or equal to 1.

As known from the above technical solutions, in embodiments of the present disclosure, the pushed information is obtained according to at least one of the user's user attribute and the user's user position, then the pushed information is sorted according to the operation data of the pushed information so that first N pushed information can be presented to the user, and N is an integer larger than or equal to 1. Since the pushed information can be sorted according to the operation data of the pushed information and first N pushed information can be presented to the user so that the pushed information can satisfy the user's real acquisition intention, this can avoid the problem in the prior art about increase of data interaction between the designated application and a server corresponding thereto since the user uses a designated application to repeatedly perform query related to the acquisition intention, and thereby reduce the processing burden of the server.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve validity of the pushed information.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve the pushing efficiency.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve the clicking rate and conversion rate of the pushed information.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
Fig. 1 is a flow chart of a flow chart of a method for processing pushed information according to an embodiment of the present disclosure;
Fig. 2 is a block diagram of an apparatus for processing pushed information according to another embodiment of the present disclosure.

### Detailed Description of Preferred Embodiments

To make objectives, technical solutions and advantages of embodiments of the present invention clearer, technical solutions of embodiment of the present disclosure will be described clearly and completely with reference to figures in embodiments of the present disclosure. Obviously, embodiments described here are partial embodiments of the present disclosure, not all embodiments. All other embodiments obtained by those having ordinary skill in the art based on the embodiments of the present disclosure, without making any inventive efforts, fall within the protection scope of the present disclosure.

It needs to be appreciated that the terminals involved in the embodiments of the present disclosure comprise but are not limited to a mobile phone, a Personal Digital Assistant (PDA), a wireless handheld device, a tablet computer, a Personal Computer (PC), an MP3 player, an MP4 player, and a wearable device (e.g., a pair of smart glasses, a smart watch, or a smart bracelet).

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

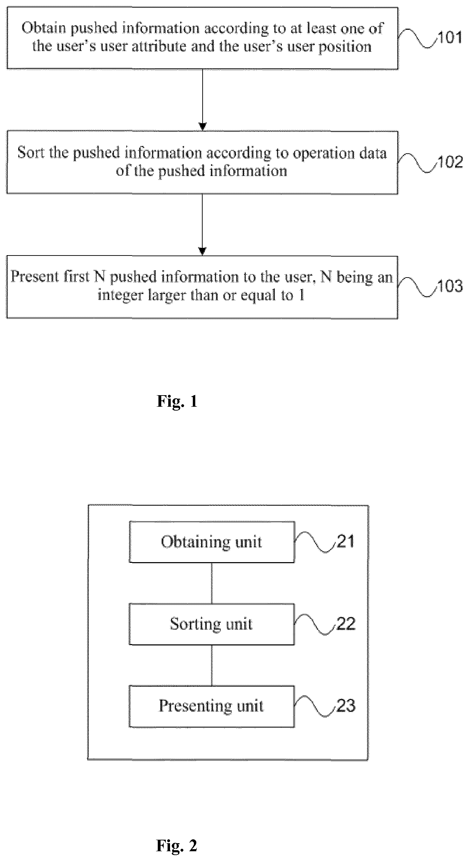

Fig. 1 is a flow chart of a flow chart of a method for processing pushed information according to an embodiment of the present disclosure.
101: Obtaining pushed information according to at least one of the user's user attribute and the user's user position.
102: Sorting the pushed information according to operation data of the pushed information.
103: Presenting first N pushed information to the user, N being an integer larger than or equal to 1.

It needs to be appreciated that a subject for executing 101-103 may be an application located in a local terminal, or a function unit such as a plug-in or Software Development Kit (SDK) located in an application of the local terminal, or a processing engine located in a server on a network side, or a distributed system located on the network side. This is not particularly limited in the present embodiment.

It may be understood that the application may be a native application (nativeAPP) installed on the terminal, or a web application (webAPP) of a browser on the terminal. This is not particularly limited in the present embodiment.

As such, the pushed information is obtained according to at least one of the user's user attribute and the user's user position, then the pushed information is sorted according to the operation data of the pushed information so that first N pushed information can be presented to the user, and N is an integer larger than or equal to 1. Since the pushed information can be sorted according to the operation data of the pushed information and first N pushed information can be presented to the user so that the pushed information can satisfy the user's real acquisition intention, this can avoid the problem in the prior art about increase of data interaction between the designated application and a server corresponding thereto since the user uses a designated application to repeatedly perform query related to the acquisition intention, and thereby reduce the processing burden of the server.

The content of the so-called pushed information may comprise but is not limited to at least one of product or service information provided by a service provider, name information of the service provider, position information of the service provider and contact information of the service provider, as automatically generated by the system, for example, advertisement, or may further comprise but is not limited to at least one of product or service information provided by the service provider, name information of the service provider, position information of the service provider and contact information of the service provider, as edited by an editor, for example, soft article. This is not particularly limited in the present embodiment.

The so-called soft article may further be called shopping guide article and is distinct from advertisement. Advertisement is a straightforward and hard propagation manner whereas a soft article is an implemented type soft propagation manner. Both advertisement and soft article are propagative articles. Soft article is more eye-catching to the public and increases a clicking rate. Once a reader reads the soft article, it can certainly touch the reader's heart, and thereby causes consensus between the reader and the writer and causes the reader to have a desire to buy or have an impulse to learn from the hero in the article. Such soft article generally is popular in the realm of Taobao. Many Taobao shop owners write soft articles by writing a touching story with respect to a certain product, and guide consumers to enter their own Taobao shops by implanting advertising content in the soft article.

Usually, pushing services for pushing information, such as advertisement pushing, soft article pushing, games pushing or application pushing, push matched information to the user based on the user's user position. Such pushed information obtained by performing matching operation completely depending on the user position might not satisfy the user's real acquisition intention so that the user can only obtain a search result in compliance with the acquisition intention by using a designated application to repeatedly perform query related to the acquisition intention. This increases data interaction between the designated application and a server corresponding thereto, and thereby causes increase of the processing burden of the server.

In the present embodiment, pushed information may be presented to the user in many ways, e.g., short message, multimedia message, World Wide Web (Web) page. This is not particularly limited in the present embodiment. A pushing carrier of the pushed information refers to a channel manner for publishing the pushed information.

In a specific implementation mode, the carrier of the pushed information may be a plane carrier such as a message, an area on a page or web element, publication or the like.

The page, sometimes also called web page, may be a web page written on the basis of HyperText Markup Language (HTML), namely, HTML page, or may be a web page based on HTML and Java language, namely, Java Server Page (JSP), or may be a web page written with other programming languages. This is not particularly limited in the present embodiment.

Specifically, the page may comprise a display area defined by one or more page tags such as HyperText Markup Language (HTML) tag, or JSP tag, and the display area is called a page element such as text, picture, hyperlink, button, input box, drop-down box or the like. This is not particularly limited in the present embodiment.

In another specific implementation mode, the carrier of the pushed information may be a three-dimensional carrier such as a 3D carrier or 4D carrier.

It needs to be appreciated that the carrier of the pushed information may be carrier related to the pushed information, for example, a product pushed by the pushed information, or may be a carrier irrelevant to the pushed information, for example, a designated area of a page, a standard 3-dimensional geometrical graph or the like. This is not particularly limited in the present embodiment.

Optionally, in a possible implementation mode of the present embodiment, before 101, the method may further comprise acquiring the user's user position.

In a specific implementation mode, specifically, it is feasible to acquire the user's user position according to the user's positioning data.

The so-called user's positioning data may specifically mean that the terminal used by the terminal employs various current technologies, such as Global Positioning System (GPS) technology, Wireless Fidelity (Wi-Fi) positioning technology or base station positioning technology to obtain a positioning result of the terminal, namely, geographical location data of the terminal. This is not particularly limited in the present embodiment.

In another specific implementation mode, specifically, it is feasible to acquire the user's user position according to an IP address of the terminal used by the user.

After the user's user position is acquired, a region which the user belongs to, such as Beijing, Shanghai or Shenzhen, may be specifically determined according to the user's user position.

Optionally, in a possible implementation mode of the present embodiment, before 101, the method may further comprise acquiring the user's user attribute.

Wherein, the user's user attribute may comprise but is not limited to at least one of the following information:
the user's gender
the user's age;
the user's occupation;
the user's diploma; and
the user's hobbies.

In a specific implementation mode, specifically, it is feasible to acquire the user's user attribute according to the user's registration information.

In another specific implementation mode, specifically, it is feasible to acquire the user's user attribute according to the user's user behavior data.

Wherein, the user behavior data may comprise but is not limited to at least one of user search log and user click log. This is not particularly limited in the present embodiment.

At present, some websites record user behaviors for specific users. These data obtained from the record are the user's user behavior data.

For example, the user's user behavior data are recorded according to historical behaviors of a registered user. In the case, it is necessary to record generated historical behaviors after the registered user logs in, to form the user behavior data of the registered user. Hence, the user behavior data at this time is on the premise that the registered user needs to perform a login operation.

Alternatively, for another example, the user's user behavior data are recorded according to historical behaviors of a browser user. In this case, it is necessary to record generated historical behaviors after any user uses a browser of the same terminal, to form the user behavior data of the browser user. Hence, the user behavior data at this time is on the premise that a specific browser needs to be used to perform browsing operation, not with respect to a specific user.

Alternatively, for another example, the user's user behavior data are recorded according to historical behaviors of a terminal user. In this case, it is necessary to record generated historical behaviors after any user uses the same terminal, to form the user behavior data of the terminal user. Hence, the user behavior data at this time is on the premise that a specific terminal needs to be used to perform browsing operation, not with respect to a specific user.

Specifically, some current data mining method may be specifically employed to mine the user's user behavior data to determine the user's user attribute, for example, data mining methods such as classification, regression analysis, clustering, association rules, features, variations and deviation analysis or web page mining. This is not particularly limited in the present embodiment.

After the user's user attribute is acquired, specifically it is feasible to determine a group to which the user belongs according to the user's attribute.

Wherein, the group may be a group classified according to an age, for example, children, juvenile and youth, or the elderly, or may be a group classified according to gender, for example, male or female, or may further be a group classified according to the user's other attribute such as hobbies or occupation. This is not particularly limited in the present embodiment.

As such, after the region or group to which the user belongs, it is feasible to record a correspondence relationship of the region to which the user belongs, or to record a correspondence relationship between the user's user identifier information and the group to which the user belongs, as a basis for subsequent query.

In a specific implementation procedure, the user's user identifier information may be a user identify (ID) allocated by a website for the user.

When the user uses some services of the website, he needs to register an account number. At this time, the website allocates to the user an identity solely identifying the user, namely, user identity. As such, when the user logs in the website, the website can provide the user with corresponding service according to the user's user identity.

In another specific implementation procedure, the user's user identifier information may be a Cookie identifier allocated by the website to the user.

Cookie, sometimes in plural form Cookies, refers to data (usually encrypted data) stored by some websites on the user's native terminal to discern user identity and perform session tracking. At this time, when the user uses some service of the website, he needs to register an account number, and the website may use Cookie tracking to make statistic of the user's habits of accessing to the website, for example, what time the user access, which pages he accesses, and stay duration on each page. As such, a correspondence relationship between the Cookie identifier and the user behavior data may be built. These information may be used to provide the user with personalized service on the one hand, and on the other hand, may be used as a tool for understanding all user behaviors and exhibits certain reference value for improvement of website management strategies.

In another specific implementation procedure, the user's user identifier information may be an IP address of the terminal used by the user.

When the user uses some services of the website, he needn't register an account number, and the website may directly use the IP address of the terminal used by the user to discern the user's identity.

Optionally, in a possible implementation mode of the present embodiment, in 101, it is specifically feasible to acquire user identifier information of the current user (briefly, the user), and thereby acquire a region to which the user belongs to or a group to which the user belongs according to the user's user identifier information, and then use at least one of the user's user attribute and the user's user position to perform matching operation in a resource database to obtain matched pushed information.

In a specific implementation procedure, specifically it is feasible to, according to the user's user identifier information, use a correspondence relationship between the recorded user identifier information and the region to obtain the region to which the user belongs and which corresponds to the user's user identifier information.

In another specific implementation procedure, specifically it is feasible to, according to the user's user identifier information, use a correspondence relationship between the recorded user identifier information and the group to obtain the group to which the user belongs and which corresponds to the user's user identifier information.

Optionally, in a possible implementation mode of the present embodiment, before 102, specifically it is feasible to collect the user's operation behavior log for the pushed information to obtain operation data of the pushed information.

Wherein, the operation data of the pushed information may comprise but is not limited to at least one of the following operation data:
data of a clicking operation;
data of the clicking operation and a time length of the clicking operation;
data of the clicking operation and a frequency of the clicking operation;
data of a dragging operation;
data of the dragging operation and a time length of the dragging operation;
data of the dragging operation and a frequency of the dragging operation;
data of a selection operation;
data of the selection operation and a time length of the selection operation; and
data of the selection operation and a frequency of the selection operation.

Wherein, the so-called clicking operation may be a trigger operation performed by the user by using an external input device such as a mouse or keyboard to control a cursor, or may be a contact operation performed by the user by using a finger or input pen to contact a contact input device such as a touch screen. This is not particularly limited in the present embodiment.

In a specific implementation procedure, specifically it is feasible to acquire operation data from the user's operation of the carrier of the pushed information.

An example is given in which a standard cube is taken as a 3D carrier of the pushed information. Six content of the pushed information are respectively published on six surfaces of the standard cube in its initial state, i.e., content A is pushed on a front surface, content B is published on a rear surface, content C is published on an uppers surface, content D is published on a lower surface, content E is published on a left surface, and content F is published on a right surface.

Specifically, specifically it is feasible to acquire data resulting from the user's operation of dragging the cube or from the user's clicking operation, for example, interchange the position of the front surface and the rear surface by performing dragging operation or clicking operation for the front surface. As such, content B published on the rear surface exactly faces the user to facilitate the user's further browsing or operation. Alternatively, it is feasible to acquire the user's dragging operation or clicking operation of the cube or a time length of the dragging operation or clicking operation; alternatively, it is feasible to acquire data resulting from the user's operation of dragging the cube or from the user's clicking operation, and a frequency of the dragging operation or clicking operation, and the like.

In another specific implementation procedure, specifically it is feasible to acquire operation data resulting from the user's operation of the content of the pushed information.

An example is presented in which a designated area of a page is used as a plane carrier of the pushed information. The content of the pushed information is published in the designated area.

Specifically, it is feasible to acquire data resulting from an operation of selecting partial words, phrases, sentences or paragraphs in the content of the pushed information, for example, perform an operation of selecting phrase G in the content of the pushed information and then perform further operations such as copying, sharing and searching so that it is possible to share the phrase G among other users, or further query for documents related to the phrase G; alternatively, it is feasible to acquire data resulting from an operation of selecting partial words, phrases, sentences or paragraphs in the content of the pushed information; alternatively, it is feasible to acquire data resulting from an operation of selecting partial words, phrases, sentences or paragraphs in the content of the pushed information, and a frequency of the selection operation.

In another specific implementation procedure, specifically it is feasible to acquire operation data resulting from the user's operation of operation options of the pushed information.

An example is presented in which a designated area of a page is used as a plane carrier of the pushed information. The content of the pushed information and operation options of the pushed information are published in the designated area.

Specifically, it is feasible to acquire data resulting from the user's operation of clicking operation options of the pushed information, for example, more content buttons, details buttons, sharing buttons, comment buttons and favorite buttons, or it is further feasible to acquire data resulting from the user's operation of clicking operation options of the pushed information and a time length of the clicking operation, or further feasible to data resulting from the user's operation of clicking operation options of the pushed information and a frequency of the clicking operation.

In another specific implementation procedure, specifically it is feasible to acquire a combination of any two types of operation data or a combination of three types of operation data among operation data resulting from the user's operation of the carrier of the pushed information, operation data resulting from the user's operation of the content of the pushed information, and operation data resulting from the user's operation of operation options of the pushed information. Wherein reference may be made to the above relevant content for detailed depictions of each type of operation data, and detailed depictions are not presented any more here.

Optionally, in a possible implementation mode of the present embodiment, in 102, the implementation procedure of sorting the pushed information according to operation data of the pushed information may obtain a different sorting result according to different operation data.

In a specific implementation procedure, the larger the frequency or time length of the clicking operation of the pushed information is, the better a corresponding sorting result is, which indicates that it is presented at a more forward position. On the contrary, the smaller the frequency or time length of the clicking operation of the pushed information is, the worse a corresponding sorting result is, which indicates that it is presented at a more backward position.

In another specific implementation procedure, the larger the frequency or time length of the selection operation of the pushed information is, the better a corresponding sorting result is, which indicates that it is presented at a more forward position. On the contrary, the smaller the frequency or time length of the selection operation of the pushed information is, the worse a corresponding sorting result is, which indicates that it is presented at a more backward position.

Optionally, in a possible implementation mode of the present embodiment, in 102, specifically it is feasible to sort the pushed information according to grade data of the pushed information and operation data of the pushed information.

Wherein, reference may be made to the above related content for detailed depictions about acquisition of the operation data of the pushed information, and detailed depictions are not presented any more here.

The grade data of the pushed information refers to a score reflecting a presentation position of the pushed information. The higher the score is, the more forward the presentation position is. Specifically, specifically it is possible to pre-set grade data of each pushed information, e.g., set grade data corresponding to the highest score for the pushed information corresponding to a popular product type such as a mobile phone, and set grade data corresponding to higher scores for pushed information corresponding to designated classes.

The implementation procedure of sorting the pushed information according to grade data of the pushed information and operation data of the pushed information may obtain a different sorting result according to different operation data.

In a specific implementation procedure, the larger the score of the presentation position of the pushed information is and the larger the frequency or time length of the clicking operation of the pushed information is, the better a corresponding sorting result is, which indicates that it is presented at a more forward position. On the contrary, the smaller the score of the presentation position of the pushed information is and the smaller the frequency or time length of the clicking operation of the pushed information is, the worse a corresponding sorting result is, which indicates that it is presented at a more backward position

In another specific implementation procedure, the larger the score of the presentation position of the pushed information is and the larger the frequency or time length of the selection operation of the pushed information is, the better a corresponding sorting result is, which indicates that it is presented at a more forward position. On the contrary, the smaller the score of the presentation position of the pushed information is and the smaller the frequency or time length of the selection operation of the pushed information is, the worse a corresponding sorting result is, which indicates that it is presented at a more backward position

In the present embodiment, the pushed information is obtained according to at least one of the user's user attribute and the user's user position, then the pushed information is sorted according to the operation data of the pushed information so that first N pushed information can be presented to the user, and N is an integer larger than or equal to 1. Since the pushed information can be sorted according to the operation data of the pushed information and first N pushed information can be presented to the user so that the pushed information can satisfy the user's real acquisition intention, this can avoid the problem in the prior art about increase of data interaction between the designated application and a server corresponding thereto since the user uses a designated application to repeatedly perform query related to the acquisition intention, and thereby reduce the processing burden of the server.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve validity of the pushed information.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve the pushing efficiency.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve the clicking rate and conversion rate of the pushed information.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, different emphasis is placed on respective embodiments, and reference may be made to related depictions in other embodiments for portions not detailed in a certain embodiment.

Fig. 2 is a block diagram of an apparatus for processing pushed information according to another embodiment of the present disclosure. As shown in Fig. 2, the apparatus for processing pushed information according to the present embodiment may comprise an obtaining unit 21, a sorting unit 22 and a presenting unit 23, wherein the obtaining unit 21 is configured to obtain pushed information according to at least one of the user's user attribute and the user's user position; the sorting unit 22 is configured to sort the pushed information according to operation data of the pushed information; and the presenting unit 23 is configured to present first N pushed information to the user, N being an integer larger than or equal to 1.

It needs to be appreciated that the apparatus for processing pushed information according to the present embodiment may be an application located in a local terminal, or a function unit such as a plug-in or Software Development Kit (SDK) located in an application of the local terminal, or a processing engine located in a server on a network side, or a distributed system located on the network side. This is not particularly limited in the present embodiment.

It may be understood that the application may be a native application (nativeAPP) installed on the terminal, or a web application (webAPP) of a browser on the terminal. This is not particularly limited in the present embodiment.

Optionally, in a possible implementation mode of the present embodiment, the carrier of the pushed information may be a plane carrier such as a message, an area on a page or web element, publication or the like.

Optionally, in a possible implementation mode of the present embodiment, the carrier of the pushed information may be a three-dimensional carrier such as a 3D carrier or 4D carrier.

It needs to be appreciated that the carrier of the pushed information may be carrier related to the pushed information, for example, a product pushed by the pushed information, or may be a carrier irrelevant to the pushed information, for example, a designated area of a page, a standard 3-dimensional geometrical graph or the like. This is not particularly limited in the present embodiment.

Optionally, in a possible implementation mode of the present embodiment, the sorting unit 22 may be further configured to collect the user's operation behavior log for the pushed information to obtain operation data of the pushed information.

Wherein, the operation data of the pushed information obtained by the sorting unit 22 may comprise but is not limited to at least one of the following operation data:
data of a clicking operation;
data of the clicking operation and a time length of the clicking operation;
data of the clicking operation and a frequency of the clicking operation;
data of a dragging operation;
data of the dragging operation and a time length of the dragging operation;
data of the dragging operation and a frequency of the dragging operation;
data of a selection operation;
data of the selection operation and a time length of the selection operation; and
data of the selection operation and a frequency of the selection operation.

Wherein, in a possible implementation mode of the present embodiment, the operation data of the pushed information obtained by the sorting unit 22 may comprise but is not limited to at least one of the following operation data:
operation data resulting from the user's operation of the carrier of the pushed information;
operation data resulting from the user's operation of the content of the pushed information; and
operation data resulting from the user's operation of operation options of the pushed information.

Optionally, in a possible implementation mode of the present embodiment, the sorting unit 22 may be specifically configured to sort the pushed information according to grade data of the pushed information and operation data of the pushed information.

It needs to be appreciated that the method in the embodiment corresponding to Fig. 1 may be implemented by the apparatus for processing the pushed information according to the present embodiment. Reference may be made to associated resources in the embodiment corresponding to Fig. 1, which will not be detailed any longer.

In the present embodiment, the obtaining unit obtains the pushed information according to at least one of the user's user attribute and the user's user position, then the sorting unit sorts the pushed information according to the operation data of the pushed information so that the presenting unit presents first N pushed information to the user, and N is an integer larger than or equal to 1. Since the pushed information can be sorted according to the operation data of the pushed information and first N pushed information can be presented to the user so that the pushed information can satisfy the user's real acquisition intention, this can avoid the problem in the prior art about increase of data interaction between the designated application and a server corresponding thereto since the user uses a designated application to repeatedly perform query related to the acquisition intention, and thereby reduce the processing burden of the server.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve validity of the pushed information.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve the pushing efficiency.

In addition, with the technical solution provided by the present disclosure being employed, since the pushed information can be sorted according to the operation data of the pushed information and first N pushed information can be presented to the user so that the pushed information can satisfy the user's real acquisition intention, this can effectively improve the clicking rate and conversion rate of the pushed information.

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented in other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

Finally, it is appreciated that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial technical features therein; these modifications or substitutions do not make essence of corresponding technical solutions depart from the spirit and scope of technical solutions of embodiments of the present disclosure.

## Claims

1. A method for processing pushed information, comprising:
obtaining pushed information according to at least one of the user's user attribute and the user's user position;
sorting the pushed information according to operation data of the pushed information;
presenting first N pushed information to the user, N being an integer larger than or equal to 1.

2. The method according to claim 1, wherein the sorting the pushed information according to operation data of the pushed information comprises:
sorting the pushed information according to grade data of the pushed information and operation data of the pushed information.

3. The method according to claim 1 or 2, wherein the operation data of the pushed information comprises:
operation data resulting from the user's operation of a carrier of the pushed information;
operation data resulting from the user's operation of content of the pushed information; and
operation data resulting from the user's operation of operation options of the pushed information.

4. The method according to claim 3, wherein the carrier of the pushed information comprises a plane carrier or a 3-dimensional carrier.

5. The method according to any one of claims 1-4, wherein the operation data comprise at least one of the following operation data:
data of a clicking operation;
data of the clicking operation and a time length of the clicking operation;
data of the clicking operation and a frequency of the clicking operation;
data of a dragging operation;
data of the dragging operation and a time length of the dragging operation;
data of the dragging operation and a frequency of the dragging operation;
data of a selection operation;
data of the selection operation and a time length of the selection operation; and
data of the selection operation and a frequency of the selection operation.

6. An apparatus for processing pushed information, wherein the apparatus comprises:
an obtaining unit configured to obtain pushed information according to at least one of the user's user attribute and the user's user position;
a sorting unit configured to sort the pushed information according to operation data of the pushed information;
a presenting unit configured to present first N pushed information to the user, N being an integer larger than or equal to 1.

7. The apparatus according to claim 6, wherein the sorting unit is specifically configured to sort the pushed information according to grade data of the pushed information and operation data of the pushed information.

8. The apparatus according to claim 6 or 7, wherein the operation data of the pushed information comprises:
operation data resulting from the user's operation of a carrier of the pushed information;
operation data resulting from the user's operation of content of the pushed information; and
operation data resulting from the user's operation of operation options of the pushed information.

9. The apparatus according to claim 8, wherein the carrier of the pushed information comprises a plane carrier or a 3-dimensional carrier.

10. The apparatus according to any one of claims 6-9, wherein the operation data comprise at least one of the following operation data:
data of a clicking operation;
data of the clicking operation and a time length of the clicking operation;
data of the clicking operation and a frequency of the clicking operation;
data of a dragging operation;
data of the dragging operation and a time length of the dragging operation;
data of the dragging operation and a frequency of the dragging operation;
data of a selection operation;
data of the selection operation and a time length of the selection operation; and
data of the selection operation and a frequency of the selection operation.

11. An apparatus, comprising
one or more processors;
a memory;
one or more programs stored in the memory and configured to execute the following operations when executed by the one or more processors:
obtaining pushed information according to at least one of the user's user attribute and the user's user position;
sorting the pushed information according to operation data of the pushed information;
presenting first N pushed information to the user, N being an integer larger than or equal to 1.

12. A non-volatile computer storage medium in which one or more programs are stored, an apparatus being enabled to execute the following operations when said one or more programs are executed by the apparatus:
obtaining pushed information according to at least one of the user's user attribute and the user's user position;
sorting the pushed information according to operation data of the pushed information;
presenting first N pushed information to the user, N being an integer larger than or equal to 1.
